# EUROPEAN PATENT APPLICATION

(11) **EP 4 711 108 A1**
(43) Date of publication of application: **18.03.2026**
(21) Application number: 25201308.1
(22) Date of filing: 10.09.2025
(51) Int. Cl.: B26F 1/40, B26F 1/44

(54) **NOTCHING APPARATUS AND METHOD USING NOTCHING APPARATUS**

(30) Priority: 13.09.2024 KR 20240125857
(71) Applicant: SAMSUNG SDI CO., LTD., Yongin-si, Gyeonggi-do 17084 (KR)
(72) Inventor: Lim, Haeseong, 17084 Yongin-Si Gyeonggi-do (KR); Park, Haeryung, 17084 Yongin-Si Gyeonggi-do (KR)
(74) Representative: Gulde & Partner

(57) **Abstract**

A notching apparatus includes a base, a die coupled to the base and including an electrode plate insert protruding in an upward direction, the die configured to accommodate an electrode plate comprising a substrate and an active material on an upper surface of the die; and a cutter configured to cut the electrode plate while the electrode plate insert is penetrated into at least a portion of the active material in the upward direction.

## Description

### BACKGROUND

### 1. Field

The present disclosure relates to a notching apparatus and a method using the notching apparatus.

### 2. Description of the Related Art

While primary batteries are not designed to be (re)charged, secondary (also known as rechargeable) batteries are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

A positive electrode plate and a negative electrode plate of a lithium ion battery may be manufactured by applying a positive electrode (or cathode) active material to a positive electrode collector in the form of a metal thin film (e.g., aluminum foil) and a negative electrode (or anode) active material to a negative electrode collector in the form of a metal thin film (e.g., copper foil). Specifically, the electrode plate manufacturing process may include mixing, coating, and pressing processes of producing a rolled metal thin film substrate to which an active material is applied. In addition, the electrode plate manufacturing process may include slitting and notching processes to cut the rolled metal thin film substrate according to battery specifications.

However, in a case of processing a high-strength electrode plate in the notching process, the edges of the electrode plate may not be sharply processed, resulting in residual debris. The debris may remain on the edges or surfaces of the electrode plate, causing shorts and fires throughout the secondary battery assembly process.

### SUMMARY

The invention is defined by the appended claims. The description that follows is subjected to this limitation. Any disclosure lying outside the scope of said claims is only intended for illustrative as well as comparative purposes.

Embodiments of the present disclosure provides a notching apparatus and a method using the notching apparatus.

The present invention provides a notching apparatus including: a base; a die coupled to the base and including an electrode plate insert protruding in an upward direction, the die configured to accommodate an electrode plate including a substrate and an active material on an upper surface of the die; and a cutter configured to cut the electrode plate while the electrode plate insert is penetrated into at least a portion of the active material in the upward direction.

According to an embodiment, the height of the electrode plate insert may be equal to or lower than the thickness of the active material.

In an embodiment, the electrode plate insert has a height equal to or less than a thickness of the active material.

According to an embodiment, a first end of the electrode plate insert may contact the substrate in a state where the electrode plate is disposed on an upper surface of the die.

In an embodiment, a tip of the electrode plate insert is configured to be in contact with the substrate.

According to an embodiment, the electrode plate insert may contact a first surface of the cutter in a state where the cutter has cut the electrode plate.

In an embodiment, the electrode plate insert is configured to be in contact with a surface of the cutter upon the cutter cutting the electrode plate.

According to an embodiment, the electrode plate insert may include: a first surface extending perpendicularly from a first surface of an outer end of the die; and a second surface inclined inward of the die from the first surface of the electrode plate insert.

In an embodiment, the electrode plate insert includes: a first surface extending in the upward direction; and a second surface inclined inward of the die from a tip of the electrode plate insert.

According to an embodiment, the second surface of the electrode plate insert may be inclined at an angle of 45 degrees or less inward of the die from the first surface of the electrode plate insert.

In an embodiment, the second surface is inclined at an angle of equal to or less than 45 degrees inward of the die from the tip.

According to an embodiment, the second surface of the electrode plate insert may have a plurality of angles inclined inward of the die from the first surface of the electrode plate insert, the angles decreasing toward a top.

In an embodiment, the second surface includes a plurality of surfaces each having a respective angle inclined inward of the die from the tip, wherein the respective angle decreases toward the tip.

According to an embodiment, may further include a cover spaced apart from the die to face the die, and configured to move toward the electrode plate to fix an upper surface of the electrode plate.

In an embodiment, the notching apparatus further includes a cover spaced apart from the die and facing the die, the cover configured to move toward the electrode plate to fix an upper surface of the electrode plate.

According to an embodiment, the height of the electrode plate insert may range from 1 µm to 1 cm.

In an embodiment, the electrode plate insert has a height ranging from about 1 µm to about 1 cm.

According to an embodiment, the active material may include a first active material applied to a first surface of the substrate and a second active material applied to a second surface of the substrate, and the cutter sequentially may cut the first active material, the substrate, and the second active material.

In an embodiment, the active material includes a first active material applied to an upper surface of the substrate and a second active material applied to a lower surface of the substrate, and wherein the cutter is configured to sequentially cut the first active material, the substrate, and the second active material.

The present invention further provides a notching method including: providing the afore-mentioned notching apparatus, placing an electrode plate including a substrate and an active material on an upper surface of the die; and cutting the electrode plate while the electrode plate insert penetrates into at least a portion of the active material by downwardly moving the cutter.

According to an embodiment, the height of the electrode plate insert may be equal to or lower than the thickness of the active material in the operation of forming the electrode plate insert.

In an embodiment, the electrode plate insert has a height equal to or less than a thickness of the active material.

According to an embodiment, in the placing of the electrode plate, a first end of the electrode plate insert may contact the substrate in a state where the electrode plate is disposed on the upper surface of the die.

In an embodiment, a tip of the electrode plate insert is in contact with the substrate.

According to an embodiment, the placing of the electrode plate may include inserting the electrode plate insert into at least a portion of the active material in a vertical direction.

In an embodiment, the placing includes penetrating the electrode plate insert into the at least a portion of the active material in the upward direction.

According to an embodiment, the operation of preparing the die may include: forming a first surface of the electrode plate insert extending perpendicularly from a first surface of an outer end of the die; and forming a second surface of the electrode plate insert inclined inward of the die from the first surface of the electrode plate insert.

In an embodiment, a first surface of the electrode plate insert extends in the upward direction, and wherein a second surface of the electrode plate insert is inclined inward of the die from a tip of the electrode plate insert.

According to an embodiment, in the forming of the second surface of the electrode plate insert, the second surface may be formed to be inclined at an angle of 45 degrees or less inward of the die from the first surface of the electrode plate insert.

In an embodiment, the second surface is inclined at an angle of equal to or less than 45 degrees inward of the die from the tip.

According to an embodiment, in the forming of the second surface of the electrode plate insert, the second surface may have a plurality of angles inclined inward of the die from the first surface of the electrode plate insert, the angles decreasing toward a top.

In an embodiment, the second surface includes a plurality of surfaces each having a respective angle inclined inward of the die from the tip, wherein the respective angle decreases toward the tip.

According to an embodiment, may further include, prior to the cutting of the electrode plate, fixing an upper surface of the electrode plate by moving a cover spaced apart from the die toward the electrode plate.

In an embodiment, the notching method further includes fixing an upper surface of the electrode plate.

According to an embodiment, in the forming of the electrode plate insert, the height of the electrode plate insert may range from 1 µm to 1 cm.

In an embodiment, the electrode plate insert has a height ranging from about 1 µm to about 1 cm.

According to an embodiment, the active material may include a first active material applied to a first surface of the substrate and a second active material applied to a second surface of the substrate, and the cutting of the electrode plate may include: cutting the first active material by the cutter; cutting the substrate by the cutter; and cutting the second active material by the cutter and the electrode plate insert of the die.

In an embodiment, the active material includes a first active material applied to an upper surface of the substrate and a second active material applied to a lower surface of the substrate, and wherein the cutter sequentially cuts the first active material, the substrate, and the second active material.

According to various embodiments of the present disclosure, the electrode plate insert of the die is previously inserted into the active material and cuts the electrode plate while supporting the substrate subjected to a large shear stress, so that the cutting force is uniformly distributed and the formation of debris during the edge cutting process of the electrode plate may be prevented.

According to various embodiments of the present disclosure, the repeated notching process may prevent foreign matter (e.g., metal powder, etc.) from being deposited on the mold or forming burrs on the substrate.

According to various embodiments of the present disclosure, short circuits, fires, and the like of secondary batteries may be prevented.

According to various embodiments of the present disclosure, the cover may press the electrode plate to prevent coming off and movement of the electrode plate during the notching process, thereby increasing the accuracy of the cutting.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is an exploded perspective view showing a notching apparatus according to embodiments of the present disclosure.
FIG. 2 is a cross-sectional view showing a notching apparatus according to a comparative example in which a cutter cuts an electrode plate.
FIG. 3 is a cross-sectional view showing an electrode plate insert being inserted into an active material before a cutter cuts an electrode plate in a notching apparatus according to embodiments of the present disclosure.
FIG. 4 is a cross-sectional view showing after the cutter has cut the electrode plate in the notching apparatus according to embodiments of the present disclosure.
FIG. 5 is a side view showing the electrode plate completely cut by the notching apparatus according to embodiments of the present disclosure.
FIG. 6 is a cross-sectional view showing after the cutter has cut the one-surface-coated electrode plate in the notching apparatus according to embodiments of the present disclosure.
FIG. 7 is a plan view showing a cutter and an electrode plate in the notching apparatus according to embodiments of the present disclosure.
FIG. 8 is a cross-sectional view showing an electrode plate insert of the notching apparatus according to embodiments of the present disclosure.
FIG. 9 is a cross-sectional view showing an electrode plate insert of the notching apparatus according to embodiments of the present disclosure.
FIG. 10 is a cross-sectional view showing an electrode plate insert of the notching apparatus according to embodiments of the present disclosure.
FIG. 11 is a cross-sectional view showing an electrode plate insert of the notching apparatus according to embodiments of the present disclosure.
FIG. 12 is a flowchart showing a notching method according to embodiments of the present disclosure.

### DETAILED DESCRIPTION OF THE EMBODIMENTS

Hereinafter, embodiments of the present disclosure will be described, in detail, with reference to the accompanying drawings.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The embodiments described herein can be explained with reference to cross-sectional views and/or plain views as example views of the present disclosure. In the drawing, the thicknesses of films and regions can be exaggerated for effective description of technical contents. Thus, regions presented as an example in the drawings have general properties, and shapes of the exemplified areas can be used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof. Like reference numerals refer to like elements throughout the specification.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

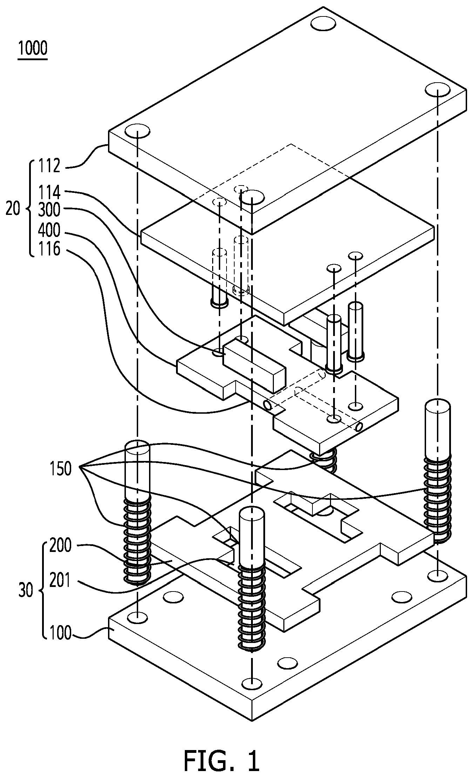

FIG. 1 is an exploded perspective view showing a notching apparatus 1000 according to embodiments of the present disclosure.

The notching apparatus 1000 includes a base 100, a die 200 coupled to the base 100, and cutters 300 disposed above the die 200. The notching apparatus may further include a cover 400 configured to fix the electrode plate disposed on the die 200.

The notching apparatus 1000 may include a notching mold capable of notching a successively provided electrode plate to cut the electrode plate into electrode plates according to predetermined standards. The notching apparatus may include an upper mold 20 and a lower mold 30. In an embodiment, a substrate having an active material applied thereto may be provided between the upper mold 20 and the lower mold 30.

The upper mold 20 may include a first base plate 112, a stripper plate 114, the cutters 300, and the cover 400. The stripper plate 114 may be fixedly coupled to the lower portion of the first base plate 112. The cover 400 may be coupled to the stripper plate 114. In an embodiment, a stripper connecting pin may connect and couple the cover 400 and the stripper plate 114. The cover 400 may include cutter receiving portions 116. The cutters 300 may be coupled to the stripper plate 114, and may be received in the cutters receiving portions 116 of the cover 400.

Each of the cutter receptacles 116 may have a structure having an open configuration. However, this is not intended to be limiting, and each of the cutter receptacles 116 may be in the form of a through-hole into which the corresponding cutter 300 is inserted to extend through the cover 400.

The cover 400 may include a notching oil supply path (not shown) positioned within the cover 400. The notching oil supply path may supply notching oil to the side surfaces of the cutter receptacles 116. In an embodiment, side surfaces of the cutters 300 are arranged to face the side surfaces of the cutter receptacles 116, such that the side surfaces of the cutters 300 may be supplied with notching oil.

The lower mold 30 may include a base 100 and a die 200. The die 200 may be fixedly coupled to the base 100. The die 200 may be fixedly coupled to the upper portion of the base 100. The die 200 may include cutter receptacles 201.

The upper mold 20 and the lower mold 30 may be connected to each other while being spaced apart. In an embodiment, the upper mold 20 and the lower mold 30 may be coupled by connecting the first base plate 112 and the base 100 using a base guide post 150. However, this is not intended to be limiting, and the notching apparatus according to the present disclosure may further include any component necessary in the structure coupling the upper mold 20 and the lower mold 30 for cutting the electrode plate.

The upper mold 20 may be configured to move upward away from or downward toward the lower mold 30. In an embodiment, the lower mold 30 may be configured to move upward toward or downward away from the upper mold 20. When the upper mold 20 moves downwards, the cover 400 may contact the die 200. When the electrode plate is disposed on the die 200, the cover 400 may engage the electrode plate to fix the electrode plate.

In an embodiment, the upper mold 20 moves downwards, and the cutters 300 may be lowered and inserted into the cutter receptacles 201. In an embodiment, the electrode plate is disposed on the die 200, the cutters 300 may penetrate and cut the electrode plate. The cut electrode plates may be removed through the cutter receptacles 201.

The cutter receptacles 201 and/or the cutters 300 may be formed into a shape corresponding to predetermined standards. In an embodiment, the cutter receptacles 201 and/or the cutters 300 may correspond to the cut shape of the electrode plate. Similarly, the cutter receptacles 116 may be configured to correspond to the shape of the cutters 300 to receive the cutters 300.

The notching apparatus 1000 may further include other components necessary to manufacture an electrode plate for a secondary battery in addition to the components described with respect to FIG. 1.

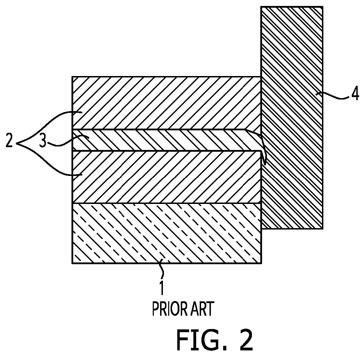

FIG. 2 is a cross-sectional view showing a notching apparatus according to a comparative example in which a cutter cuts an electrode plate.

In the notching apparatus according to a comparative example, a die 1 may be provided in the shape of a flat plate having an electrode plate disposed on the upper surface thereof. The electrode plate serving as an object to be cut may be provided with a substrate 3 between active materials 2 and may be disposed on the upper surface of the die 1. A cutter 4 may cut the electrode plate disposed on the upper surface of the die 1. The cutter 4 may move downwards from the upper side of the electrode plate to the lower side to sequentially cut the upper active material 2, the substrate 3, and the lower active material 2.

In the notching process according to a comparative example, the cutter 4 having a right-angled shape with flat edges may cut off the electrode plate between the die 1 and the cutter 4 by passing through the cutter 4 with an almost zero gap. The shear force of the cutter 4 may vary due to uneven properties of the electrode plate itself (e.g., density, loading level, etc.), resulting in formation of foreign matter during the notching process.

For example, as shown in FIG. 2, while the cutter 4 moves downwards to cut the active materials 2 and the substrate 3, a thread (a length ranging from 1 mm to 10 mm) or a burr (a length ranging from 1 µm to 1 mm) is formed on the substrate 3 at an edge of the electrode plate where the shear stress is relatively large. In particular, for example of high-strength electrode plate, the shear force of the cutter 4 may be greatly unbalanced, and foreign matter may remain on the edges or surface of the electrode plate, thereby causing short circuits and fires before, during, and after assembly.

Advantageously, embodiments of the present disclosure provide a notching apparatus able to modify the shape of a die so that the shear force of the cutter is uniformly distributed when cutting an electrode plate.

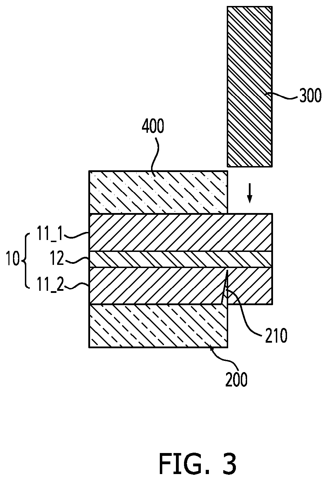

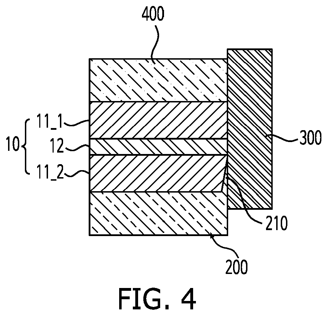

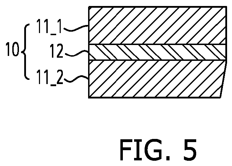

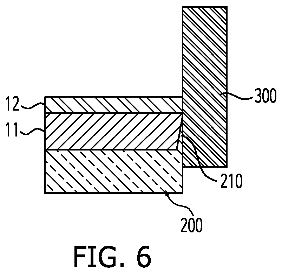

FIG. 3 is a cross-sectional view showing an electrode plate insert 210 being inserted into an active material 11 before a cutter 300 cuts an electrode plate 10 in a notching apparatus according to embodiments of the present disclosure, FIG. 4 is a cross-sectional view showing after the cutter 300 has cut the electrode plate 10 in the notching apparatus according to embodiments of the present disclosure, FIG. 5 is a side view showing the electrode plate 10 completely cut by the notching apparatus according to embodiments of the present disclosure, and FIG. 6 is a cross-sectional view showing after the cutter 300 has cut the one-surface-coated electrode plate 10 in the notching apparatus according to embodiments of the present disclosure.

Referring to FIGS. 3 to 6, the notching apparatus may include a die 200 on which an electrode plate 10 including active materials 11 is disposed, and a cutter 300 configured to cut the electrode plate 10. According to embodiments, the notching apparatus may further include a cover 400 configured to fix the upper surface of the electrode plate 10.

In an embodiment, the notching apparatus may manufacture the electrode plate 10 for a secondary battery according to predetermined standards by downwardly moving the cover 400 to fix the electrode plate 10 and cutting a portion of the electrode plate 10. In an embodiment, the notching apparatus may include a structure in which the notching apparatus shown in FIG. 1 is assembled.

In an embodiment, the electrode plate 10 including the substrate 12 and the active material 11 may be disposed on the die 200, and an electrode plate insert 210 may be provided on a first end of the die 200 to protrude upward. The cutter 300 may be disposed spacing apart from the die 200, and may cut the electrode plate 10 with the electrode plate insert 210 inserted into at least a portion of the active material 11.

In an embodiment, the active material 11 may include a first active material 11_1 applied to a first surface (corresponding to the upper interface) of the substrate 12 and a second active material 11_2 applied to a second surface (corresponding to the lower interface) of the substrate 12. The second surface of the substrate 12 may refer to a surface opposite to the first surface of the substrate 12.

First, as shown in FIG. 3, the electrode plate 10 may be provided on the upper surface of the die 200. The second active material 11_2 of the electrode plate 10 disposed on the die 200 may be pre-inserted by the electrode plate insert 210. The electrode plate 10 disposed on the die 200 may be subjected to cutting.

The electrode plate insert 210 may be configured such that the height thereof is equal to or less than the thickness of the active material 11. In an embodiment, the height of the electrode plate insert 210 may range from about 1 µm to about 1 cm. In an embodiment, as shown in FIG. 3, the height of the electrode plate insert 210 may be set to be equal to the thickness of the second active material 11_2. A first end of the electrode plate insert 210 may be in contact with the substrate 12 in a state where the electrode plate 10 is disposed on the upper surface of the die 200.

Accordingly, the electrode plate insert 210 may serve to support the substrate 12 where a portion of the substrate 12 receives a relatively large shear stress while the cutter 300 is cutting the electrode plate 10. In this manner, the electrode plate insert 210 may serve as a support for the substrate 12 to allow the shear force of the cutter 300 to be uniformly distributed over the substrate 12 and to reduce formation of foreign matter.

In an embodiment, the height of the electrode plate insert 210 may be less than the thickness of the second active material 11_2. The cutter 300 may cut the electrode plate 10 where the electrode plate insert 210 is inserted into at least a portion of the second active material 11_2 in the vertical direction. Accordingly, formation of foreign matter on the edges of the electrode plate 10 may be reduced as the cutting progresses before the shear force of the cutter 300 becomes unevenly distributed.

The notching apparatus may further include a cover 400 spaced apart from the die 200 to face the die 200 and configured to move toward the electrode plate 10 to fix the upper surface of the electrode plate 10. In an embodiment, the cover 400 may move downward toward the electrode plate 10 disposed in the die 200 to fix the electrode plate 10. As a result, while the cutter 300 is cutting the electrode plate 10, the electrode plate 10 may be prevented from coming off or moving, thereby enabling the cutting to be performed in an accurate manner.

In an embodiment, as shown in FIG. 4, the electrode plate insert 210 may contact a first surface of the cutter 300 where the cutter 300 has cut the electrode plate 10. In an embodiment, cutter 300 may sequentially cut the first active material 11_1, the substrate 12, and the second active material 11_2. A first end of the cutter 300 may have a square cross-section.

As shown in FIG. 4, the cutter 300 may sequentially cut the first active material 11_1, the substrate 12, and the second active material 11_2 while contacting the cover 400 and a first surface of the electrode plate insert 210.

The cutter 300 may move downward in the vertical direction of the electrode plate 10 to cut the electrode plate 10 according to predetermined standards. In an embodiment, the cover 400 has moved downward and the electrode plate 10 is clamped between the cover 400 and the die 200, and the cutter 300 may move further downward beyond the cover 400.

FIG. 5 shows after the cutter 300 has cut the electrode plate 10. In an embodiment, the cut second active material 11_2 may have an inwardly inclined shape of the electrode plate 10 corresponding to the shape of the electrode plate insert 210. Because at least a portion of the second active material 11_2 is pre-cut to correspond to the shape of the electrode plate insert 210 before being cut by the cutter 300, it may be possible to reduce or suppress the formation of foreign matter from the substrate 12 during the cutting process.

Therefore, repeating the cutting process may prevent foreign matter from being deposited on the notching apparatus including the die 200 and burrs from being formed. As a result, low voltage defects, short circuit defects, and the like may be prevented during the manufacturing of the secondary battery using the notching apparatus.

Although the electrode plate 10 in FIGS. 3 to 5 shows that the first active material 11_1 and the second active material 11_2 are provided on opposite surfaces of the substrate 12, the electrode plate 10 having the active material 11 may only be provided on the first surface of the substrate 12, and may also be used in the notching apparatus according to embodiments of the present disclosure, as shown in FIG. 6. The electrode plate 10 may be cut by the cutter 300 while the electrode plate insert 210 is pre-inserted into the active material 11.

The electrode plate 10 may include a negative electrode plate. The negative electrode substrate 12 may include copper foil or nickel foil. The negative electrode active material 11 may include graphite.

The negative electrode active material 11 may include a material capable of reversibly intercalating/deintercalating lithium ions, a lithium metal, a lithium metal alloy, a material capable of doping/dedoping lithium, or a transition metal oxide.

The material capable of reversibly intercalating/deintercalating lithium ions may include a carbon-based negative electrode active material, such as crystalline carbon, amorphous carbon or a combination thereof. The crystalline carbon may include graphite such as non-shaped, sheet-shaped, flake-shaped, sphere-shaped, or fiber-shaped natural graphite or artificial graphite. The amorphous carbon may include a soft carbon, a hard carbon, a mesophase pitch carbonization product, calcined coke, and the like.

The lithium metal alloy may include lithium and a metal including Na, K, Rb, Cs, Fr, Be, Mg, Ca, Sr, Si, Sb, Pb, In, Zn, Ba, Ra, Ge, Al, or Sn.

The material capable of doping/dedoping lithium may include a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof) or a combination thereof. The Sn-based negative electrode active material may include Sn, SnO₂, a Sn-based alloy, or a combination thereof.

The silicon-carbon composite may include a composite of silicon and amorphous carbon. According to an embodiment, the silicon-carbon composite may exist in a form of silicon particles and amorphous carbon coated on the surface of the silicon particles. In an embodiment, the silicon-carbon composite may include a secondary particle (core) in which primary silicon particles are assembled, and an amorphous carbon coating layer (shell) on the surface of the secondary particle. The amorphous carbon may also exist between the primary silicon particles, and the primary silicon particles may be coated with the amorphous carbon. The secondary particle may exist dispersed in an amorphous carbon matrix.

The silicon-carbon composite may further include crystalline carbon. In an embodiment, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

In an embodiment, the electrode plate 10 is a positive electrode plate. The positive electrode substrate 12 may include aluminum foil, and the positive electrode active material 11 may include a transition metal oxide. The positive electrode active material may include a compound (e.g., lithiated intercalation compound) capable of intercalating and deintercalating lithium. In an embodiment, a composite oxide of lithium and a metal including cobalt, manganese, nickel, or combinations thereof may be used.

The composite oxide may include a lithium transition metal composite oxide. Non-limiting examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

In an embodiment, the composite oxide my include the following compounds represented by any one of the following Chemical Formulas. LiₐA_{1-b}X_{b}O₂-_{c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}CO_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GeO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8) where A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may include a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

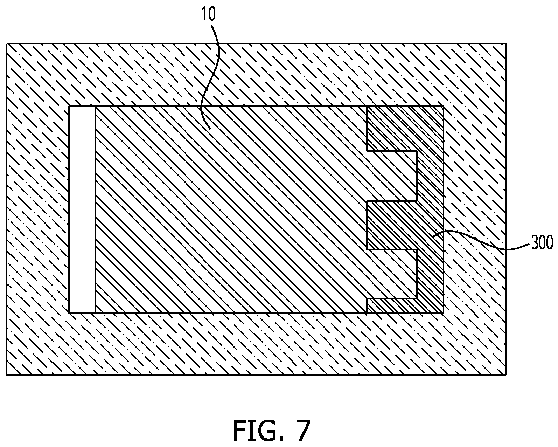

FIG. 7 is a plan view showing a cutter 300 and an electrode plate 10 in the notching apparatus according to embodiments of the present disclosure.

The cutter 300 may be provided in a shape corresponding to predetermined standards of the electrode plate 10. In an embodiment, a cross-section of a first side of the cutter 300 may correspond to the cut shape of the electrode plate 10. The notching apparatus may manufacture the electrode plate 10 for a secondary battery having predetermined standards by cutting a portion of the electrode plate 10 by the cutter 300.

In an embodiment, the electrode plate 10 disposed on the die is cut by the cutter 300 where the electrode plate insert is pre-inserted. Accordingly, a first side of the electrode plate 10 may be accurately cut to correspond to the shape of the cutter 300.

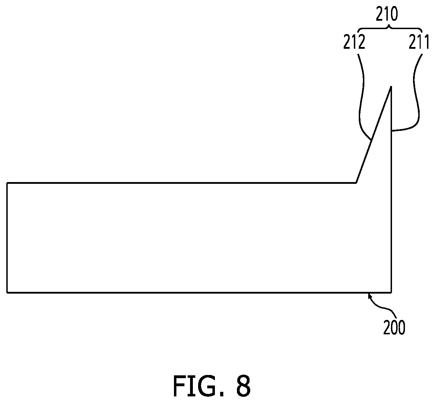

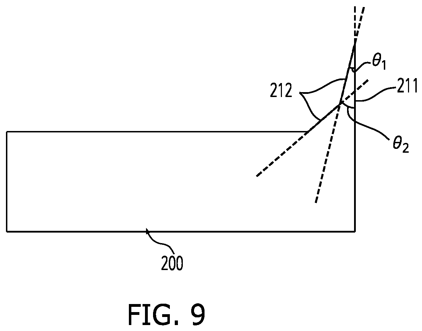

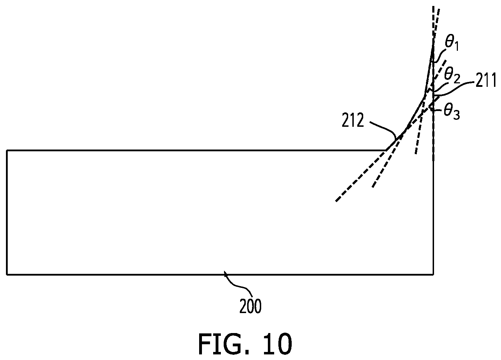

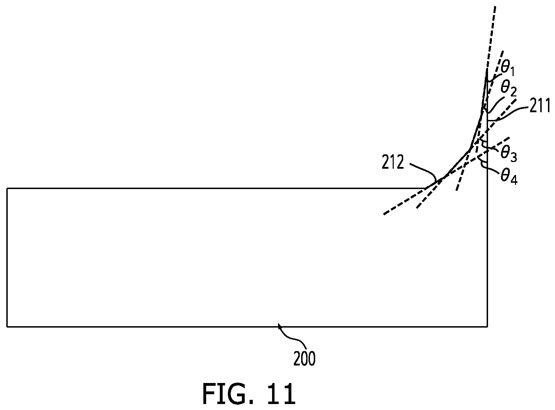

FIG. 8 is a cross-sectional view showing an electrode plate insert 210 of the notching apparatus according to embodiments of the present disclosure, FIG. 9 is a cross-sectional view showing an electrode plate insert 210 of the notching apparatus according to embodiments of the present disclosure, FIG. 10 is a cross-sectional view showing an electrode plate insert 210 of the notching apparatus according to embodiments of the present disclosure, and FIG. 11 is a cross-sectional view showing an electrode plate insert 210 of the notching apparatus according to embodiments of the present disclosure.

Referring to FIGS. 8 to 11, the electrode plate insert 210 may include a first surface 211 and a second surface 212. The first surface 211 may extend perpendicularly from the first surface of the outer end of the die 200. The second surface 212 may have an incline inward of the die 200 from the first surface 211.

In an embodiment, the second surface 212 may be inclined at an angle of equal to or less than 45 degrees inward of the die 200 from the first surface 211. When the second surface 212 is inclined at an angle greater than 45 degrees inward of the die 200 from the first surface 211, the tip of the electrode plate insert 210 may not penetrate into the active material or the portion of the active material pre-cut by the electrode plate insert 210 can be excessively large.

In an embodiment, the second surface 212 may have a plurality of angles inclined inward of the die 200 from the first surface 211. Each of the angles θ₁, θ₂, and ... θₙ may decrease toward the top. Thus, the thickness of the electrode plate insert 210 may increase in the inward direction of the die 200. That is, the thickness of the electrode plate insert 210 may decrease toward the top from the side where the electrode plate is disposed. Accordingly, the electrode plate insert 210 may have a shape having a sharp tip, and in a case where the electrode plate is disposed on the die 200, may penetrate precisely into the active material.

FIG. 9 shows two angles of the second surface 212 inclined inward of the die 200 from the first surface 211. θ₁ may be less than θ₂. Therefore, the second surface 212 inclined by an angle of θ₁ may be inclined steeper than the second surface 212 inclined by an angle of θ₂.

FIG. 10 shows three angles of the second surface 212 inclined inward of the die 200 from the first surface 211. θ₁ may be less than θ₂, and θ₂ may be less than θ₃. Accordingly, the second surface 212 inclined at the angle θ₃ may be formed with less inclination than the second surface 212 inclined at the angle θ₂, and the second surface 212 inclined at the angle θ₂ may be formed with less inclination than the second surface 212 inclined at the angle θ₁.

FIG. 11 shows four angles of the second surface 212 inclined inward of the die 200 from the first surface 211. θ₁ may be less than θ₂, θ₂ may be less than θ₃, and θ₃ may be less than θ₄. Thus, the second surface 212 inclined at the angle θ₁ may be steeper than the second surface 212 inclined at the angle θ₂, and the second surface 212 inclined at the angle θ₂ may be steeper than the second surface 212 inclined at the angle θ₃. In an embodiment, the second surface 212 inclined at the angle θ₃ may be steeper than the second surface 212 by at the angle θ₄.

Accordingly, as the angles θ₁, θ₂, and ... θₙ of the second surface 212 inclined inward of the die 200 from the first surface 211 decrease toward the top, the inclination of the second surface 212 may gradually increase to be sharp toward the portion of the second surface 212 inclined at the angle θ₁. Accordingly, the electrode plate insert 210 may have a sharper shape at the tip.

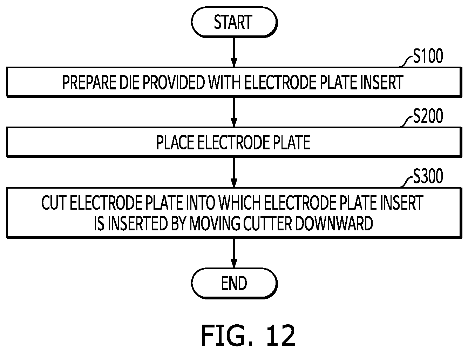

FIG. 12 is a flowchart showing a notching method according to embodiments of the present disclosure.

In an embodiment, the notching method may be performed by a notching apparatus (e.g., the notching apparatus of FIG. 1) including the base 100, the die 200, the cutter (or cutters) 300, and the cover 400.

First, the notching method may begin with an operation S100 of preparing a die. In an embodiment, the operation S100 of preparing the die may include preparing a die with a base and an electrode plate insert formed thereon. The die may have the electrode plate insert that is coupled to the base and protrudes upward. The height of the electrode plate insert may be set to be equal to or lower than the thickness of the active material in the operation of forming the electrode plate insert. In an embodiment, in the operation of forming the electrode plate insert, the height of the electrode plate insert may range from about 1 µm to about 1 cm.

In an embodiment, the operation S100 of preparing a die may include forming a first surface extending perpendicularly from a first surface of an outer end of the die and forming a second surface inclined inward of the die from the first surface. In the operation of forming the second surface, the second surface may be formed to incline at an angle of equal to or less than 45 degrees in an inward direction of the die from the first surface.

In an embodiment, in the operation of forming the second surface, a plurality of angles inclined inward of the die from the first surface may be formed on the second surface, and the angles may decrease toward the top.

After the operation S100 of preparing the die, an operation S200 of placing the electrode plate on the die may be performed. In the operation S200 of placing the electrode plate, an electrode plate including a substrate and an active material may be placed on the upper surface of the die.

In an embodiment, the operation S200 of placing the electrode plate may include an operation in which a tip end of the electrode plate insert contacts the substrate in a state where the electrode plate is placed on the upper surface of the die. The operation S200 of placing the electrode plate may include an operation in which the electrode plate insert is inserted into at least a portion of the active material in the vertical direction. The vertical direction of the active material may refer to a direction in which the cutter moves up and down to cut the electrode plate.

After the operation S200 of placing the electrode plate, an operation S300 of cutting the electrode plate may be performed. The operation S300 of cutting the electrode plate may be an operation of cutting the electrode plate in a state in which the electrode plate insert is inserted into at least a portion of the active material by downwardly moving the cutter spaced apart from the die. In an embodiment, the active material may include a first active material applied to a first surface of the substrate and a second active material applied to a second surface of the substrate. The cutting operation S300 may include an operation of cutting the first active material by the cutter, an operation of cutting the substrate by the cutter, and an operation of cutting the second active material by the cutter and the electrode plate insert of the die.

The notching method may further include, prior to the operation S300 of cutting the electrode plate, an operation of fixing the upper surface of the electrode plate using a cover. In an embodiment, in the operation of fixing the upper surface of the electrode plate, the cover spaced apart from the die may be moved toward the electrode plate to fix the upper surface of the electrode plate.

The flowchart of FIG. 12 and the respective description are merely illustrative of the present disclosure, but the scope of the present disclosure is not limited to the flowchart of FIG. 12 and the respective description. In an embodiment, one or more operations of the flowchart and the respective description may be added/changed/deleted, the order of one or more operations may be changed, and one or more operations may be performed substantially at the same time.

## Claims

1. A notching apparatus (1000) comprising:
a base (100);
a die (200) coupled to the base (100) and comprising an electrode plate insert (210) protruding in an upward direction, the die (200) configured to accommodate an electrode plate (10) comprising a substrate (12) and an active material on an upper surface of the die (200); and
a cutter (300) configured to cut the electrode plate (10) while the electrode plate insert (210) is penetrated into at least a portion of the active material in the upward direction.

2. The notching apparatus (1000) as claimed in claim 1, wherein the electrode plate insert (210) has a height equal to or less than a thickness of the active material.

3. The notching apparatus (1000) as claimed in claim 1 or 2, wherein a tip of the electrode plate insert (210) is configured to be in contact with the substrate (12).

4. The notching apparatus (1000) as claimed in any one of the preceding claims, wherein the electrode plate insert (210) is configured to be in contact with a surface of the cutter (300) upon the cutter (300) cutting the electrode plate (10).

5. The notching apparatus (1000) as claimed in any one of the preceding claims, wherein the electrode plate insert (210) comprises:
a first surface (211) extending in the upward direction; and
a second surface (212) inclined inward of the die (200) from a tip of the electrode plate insert (210).

6. The notching apparatus (1000) as claimed in claim 5, wherein the second surface (212) is inclined at an angle of equal to or less than 45 degrees inward of the die (200) from the tip.

7. The notching apparatus (1000) as claimed in claim 5, wherein the second surface (212) comprises a plurality of surfaces each having a respective angle inclined inward of the die (200) from the tip, wherein the respective angle decreases toward the tip.

8. The notching apparatus (1000) as claimed in any one of the preceding claims, further comprising a cover (400) spaced apart from the die (200) and facing the die (200), the cover (400) configured to move toward the electrode plate (10) to fix an upper surface of the electrode plate (10).

9. The notching apparatus (1000) as claimed in any one of the preceding claims, wherein the electrode plate insert (210) has a height ranging from 1 µm to 1 cm.

10. The notching apparatus (1000) as claimed in any one of the preceding claims, wherein the active material comprises a first active material (11_1) applied to an upper surface of the substrate (12) and a second active material (11_2) applied to a lower surface of the substrate (12), and wherein the cutter (300) is configured to sequentially cut the first active material (11_1), the substrate (12), and the second active material (11_2).

11. A notching method, comprising:
providing a notching apparatus (1000) as claimed in any one of the preceding claims;
placing an electrode plate (10) comprising a substrate (12) and an active material on an upper surface of the die (200); and
cutting the electrode plate (10) while the electrode plate insert (210) penetrates into at least a portion of the active material by downwardly moving a cutter (300).

12. The notching method as claimed in 11, wherein the placing comprises penetrating the electrode plate insert (210) into the at least a portion of the active material in the upward direction.

13. The notching method as claimed in 11, wherein a first surface (211) of the electrode plate insert (210) extends in the upward direction, and wherein a second surface (212) of the electrode plate insert (210) is inclined inward of the die (200) from a tip of the electrode plate insert (210).

14. The notching method as claimed in 11, further comprising fixing an upper surface of the electrode plate (10).

15. The notching method as claimed in 11, wherein the active material comprises a first active material (11_1) applied to an upper surface of the substrate (12) and a second active material (11_2) applied to a lower surface of the substrate (12), and wherein the cutter (300) sequentially cuts the first active material (11_1), the substrate (12), and the second active material (11_2).
